# EUROPÄISCHE PATENTSCHRIFT

(11) **EP 4 166 864 B1**
(45) Veröffentlichungstag und Bekanntmachung des Hinweises auf die Patenterteilung: **17.07.2024**
(21) Anmeldenummer: 22200586.0
(22) Anmeldetag: 10.10.2022
(51) Int. Cl.: F24F 13/02, F16L 23/14, B21D 53/74, B23P 19/04, B25J 1/00, B25J 15/00, B25J 9/00

(54) **VERFAHREN UND MONTAGEVORRICHTUNG ZUR AUTOMATISIERTEN MONTAGE EINES RAHMENS FÜR EIN LUFTKANALELEMENT**
METHOD AND ASSEMBLY DEVICE FOR AUTOMATED ASSEMBLY OF A FRAME FOR AN AIR DUCT ELEMENT
PROCÉDÉ ET DISPOSITIF DE MONTAGE POUR LE MONTAGE AUTOMATISÉ D'UN CADRE POUR UN ÉLÉMENT DE CONDUIT D'AIR

(30) Priorität: 18.10.2021 DE 102021126966
(43) Veröffentlichungstag der Anmeldung: 19.04.2023
(73) Patentinhaber: MEZ TECHNIK GmbH, 72770 Reutlingen (DE)
(72) Erfinder: MEZ, Jörg, 72770 Reutlingen (DE)
(74) Vertreter: Mammel und Maser Patentanwälte PartG mbB

(56) Entgegenhaltungen:
- EP-B1- 2 971 994
- US-A- 5 621 956
- US-A- 5 649 347
- US-B1- 7 013 545

## Beschreibung

Die Erfindung betrifft ein Verfahren zur automatisierten Montage eines Rahmens bestehend aus Flanschprofilen und Eckwinkeln für einen Luftkanalabschnitt zur Bildung eines Luftkanalelementes. Die Erfindung betrifft des Weiteren eine Montagevorrichtung sowie eine Montagezelle mit einer solchen Montagevorrichtung und einer Mehrfachgreifvorrichtung zur automatisierten Montage des Rahmens.

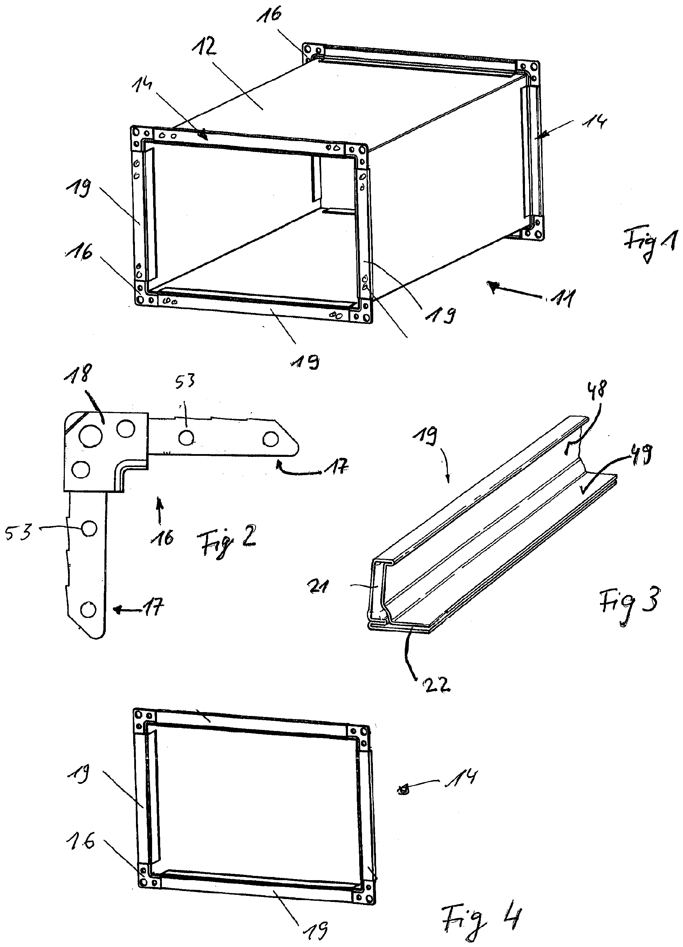

Aus der EP 3 425 251 B1 ist ein Luftkanalelement 11 bekannt, welches in Figur 1 dargestellt ist. Dieses Luftkanalelement 11 besteht aus einem Luftkanalabschnitt 12 und zwei Rahmen 14, die jeweils am stirnseitigen Ende des Luftkanalabschnitts 12 aufgesteckt sind. Zur Herstellung des Rahmens 14 sind vier Eckwinkel 16 gemäß Figur 2 und vier Flanschprofile 19 gemäß Figur 3 erforderlich. Die Eckwinkel 16 bestehen aus zwei im rechten Winkel zueinander ausgerichteten Einsteckfingern 17, die durch ein Mittelteil 18 miteinander verbunden sind. Diese Einsteckfinger 17 können Befestigungsbohrungen 53 aufweisen für die Einbringung einer Prägestelle nach dem Einstecken des Einsteckfingers 17 in das Flanschprofil 19. Die Flanschprofile 19 umfassen zumindest eine Kammer 21, in welcher der Einsteckfinger 17 des Eckwinkels 16 zur Verbindung des Eckwinkels 16 mit dem Flanschprofil 19 einsteckbar ist. Des Weiteren umfasst das Flanschprofil 19 eine einseitig offene, zweite Kammer 22, in welche ein stirnseitiges Ende des Luftkanalabschnitts 12 einsteckbar ist. Die Ausführungsform des Eckwinkels 16 gemäß Figur 2 sowie die Profilierung des Flanschprofils 19 gemäß Figur 3 sind nur beispielhaft. Zur Herstellung des Rahmens 14 gemäß Figur 4 werden die Eckwinkel 16 mit den Flanschprofilen 19 verbunden, um diesen geschlossenen Rahmen 14 zu bilden. Diese Herstellung des Rahmens 14 gemäß Figur 4 erfolgt manuell.

Aus der US 5 649 347 A ist eine Vorrichtung zur Montage von Eckwinkeln und Flanschprofilen bekannt. In einem ersten Arbeitsschritt werden Flanschprofile gehalten und darauffolgend eine Lasche der Eckwinkel in die Flanschprofile eingesteckt. Nach einem manuellen Umsetzen des Flanschprofils wird an dessen gegenüberliegenden Ende der zweite Eckwinkel eingesteckt. Nach einem weiteren manuellen Umsetzen wird das Rahmenprofil mit zwei Eckwinkeln in zwei im Abstand zueinander angeordnete Rahmenprofile eingesteckt. Darauffolgend wird diese Anordnung manuell umgesetzt und neu eingespannt und durch ein weiteres Rahmenprofil mit zwei darin eingesetzten Eckwinkeln zu einem Rahmen komplettiert.

Aus der US 5 621 945 6 A geht eine Vorrichtung hervor bei der die Montage in Analogie zur US 5 649 347 A erfolgt.

Der Erfindung liegt die Aufgabe zugrunde, ein Verfahren zur automatisierten Montage eines Rahmens, bestehend aus Eckwinkel und Flanschprofilen, für ein Luftkanalelement vorzuschlagen, um Montagekosten einzusparen. Des Weiteren liegt der Erfindung die Aufgabe zugrunde, eine Montagevorrichtung zur automatisierten Montage des Rahmens vorzuschlagen, welche bei der automatisierten Montage des Rahmens eingesetzt wird, um Montagekosten einzusparen.

Diese Aufgabe wird durch ein Verfahren zur automatisierten Montage gelöst, bei dem mit einer Handhabungseinrichtung eine Montagevorrichtung mit Flanschprofilen und Eckwinkeln bestückt wird und bei dem zwei einander gegenüberliegende und zu einem Flanschprofil ausgerichtete Eckwinkel in das Flanschprofil, vorzugsweise gleichzeitig, eingesteckt werden und eine erste Montagegruppe gebildet wird und bei dem zwei einander gegenüberliegende Montagegruppen zu dazwischen angeordneten Flanschprofilen positioniert werden und freie Einsteckfinger der Eckwinkel von der Montagegruppe in diese Flanschprofile, vorzugsweise gleichzeitig, eingesteckt werden und ein geschlossener Rahmen gebildet wird. Dieses Verfahren ermöglicht, dass die Montagevorrichtung automatisch mit Flanschprofilen und Eckwinkeln bestückt und darauffolgend automatisiert den geschlossenen Rahmen für ein Luftkanalelement bildet. Dadurch kann eine Herstellung von solchen Rahmen unabhängig von Arbeitszeiten eines Werkers erfolgen. Insbesondere können nachts solche Rahmen hergestellt werden, die darauffolgend mit Luftkanalabschnitten verbunden werden oder in Verpackungseinheiten einsortiert werden, um beispielsweise an eine Montagestelle vor Ort zu liefern.

Bevorzugt ist vorgesehen, dass mit einer Mehrfachgreifvorrichtung die Montagevorrichtung mit Eckwinkeln und Flanschprofilen bestückt wird. Dadurch können Prozesszeiten verkürzt werden, da ein Wechsel einer Greifvorrichtung, die nur die Eckwinkel oder nur die Flanschprofile greifen kann, nicht mehr erforderlich ist.

Bevorzugt ist vorgesehen, dass die Flanschprofile und die Eckwinkel in Magazinen sortiert und ausgerichtet bereitgestellt werden und von der Mehrfachgreifvorrichtung aufeinanderfolgend gegriffen werden. Dadurch kann eine weitere Prozesszeitverkürzung bei der Herstellung und Montage des Rahmens erzielt werden.

Alternativ kann vorgesehen sein, dass die Flanschprofile und/oder Eckwinkel chaotisch in Transportbehältern bereitgestellt werden, daraus entnommen und auf einem Vorlagetisch aufgelegt werden, damit darauffolgend die Flanschprofile und/oder Eckwinkel in einer definierten Lage mit der Greifvorrichtung gegriffen werden können. Dadurch kann eine kostengünstige Bereitstellung der Flanschprofile und/oder Eckwinkel erfolgen. Vorteilhafterweise kann durch eine optische Einrichtung die Ausrichtung und Lage der Flanschprofile und/oder Eckwinkel erkannt und dementsprechend die Mehrfachgreifvorrichtung zum Greifen des Flanschprofils und/oder des Eckwinkels ausgerichtet und angesteuert werden. Vorteilhafterweise werden durch die Mehrfachgreifvorrichtung alle Eckwinkel und Flanschprofile zur Bildung des Rahmens aufgenommen und mit einer einzigen Verfahrbewegung zur Bestückung der Montagevorrichtung verfahren. Dadurch kann des Weiteren eine Prozesszeitoptimierung ermöglicht werden.

Insbesondere werden mit der Mehrfachgreifvorrichtung aufeinanderfolgend Eckwinkelaufnahmen und Flanschprofilaufnahmen der Montagevorrichtung mit den Eckwinkeln und Flanschprofilen bestückt. Dabei können beispielsweise zunächst nur die Eckwinkel oder nur die Flanschprofile in die jeweilige Aufnahme eingesetzt werden. Alternativ kann auch eine aufeinanderfolgende Abarbeitung ermöglicht sein, wonach ein Eckwinkel und darauffolgend ein Flanschprofil und wiederum darauffolgend ein Eckwinkel in die jeweilige Aufnahme eingesetzt wird.

Zur Prozesszeitoptimierung ist des Weiteren bevorzugt vorgesehen, dass während der Montage der Eckwinkel und der Flanschprofile zu einem geschlossenen Rahmen die Mehrfachgreifvorrichtung oberhalb der Montagevorrichtung positioniert wird. Dadurch kann der daraufhin fertiggestellte Rahmen durch kurze Verfahrwege prozessoptimiert entnommen werden.

Bevorzugt ist vorgesehen, dass nach dem Zusammenstecken der Eckwinkel und Flanschprofile zumindest eine Prägung oder Körnung in einen Verbindungsbereich zwischen dem Einsteckfinger des Eckwinkels und des Flanschprofils eingebracht wird. Vorteilhafterweise ist an der Mehrfachgreifvorrichtung ein Prägewerkzeug vorgesehen, um die vorbeschriebene Prägung einzubringen.

Des Weiteren ist bevorzugt vorgesehen, dass die Mehrfachgreifvorrichtung den geschlossenen Rahmen aus der Montagevorrichtung entnimmt und einem Speicher zuführt. Dadurch ist eine vollautomatisierte Montage möglich.

Des Weiteren werden die fertiggestellten Rahmen für weitere Prozessschritte bereitgestellt. Dieser Speicher kann beispielsweise durch ein Wandelement einer Umhausung einer Montagezelle gebildet sein, an welchem mehrere Aufhängevorrichtungen zur Aufnahme der Rahmen vorgesehen sind.

Die der Erfindung zugrundeliegende Aufgabe wird des Weiteren durch eine Montagevorrichtung nach Anspruch 10 automatisierten Montage eines Rahmens, bestehend aus Flanschprofilen und Eckwinkeln, für ein Luftkanalelement gelöst, welche einen Grundrahmen mit einer Arbeitsebene aufweist, die sich vorzugsweise in X-/Y-Richtung erstreckt und eine erste Linearachsenanordnung aufnimmt, welche in einer ersten Verfahrrichtung in der Arbeitsebene, insbesondere X-Richtung, verfahrbar ist, und eine zweite Linearachsenanordnung aufnimmt, welche in einer zweiten Verfahrrichtung in der Arbeitsebene, insbesondere Y-Richtung, rechtwinklig zur ersten Linearachsenanordnung verfahrbar ist und dass die zweite Linearachsenanordnung teilweise von der ersten Linearachsenanordnung aufgenommen ist und eine Kreuzachsenanordnung gebildet ist und die an der Linearachsenanordnung positionierten Eckwinkelaufnahmen und Flanschprofilaufnahmen zur Montage des Rahmens zueinander verfahrbar angesteuert sind. Dadurch können die erforderlichen Verfahrbewegungen, die aufgrund der Geometrie der Eckwinkel um 90° zueinander versetzt sind, in einfacher Weise angesteuert werden, um die Einsteckfinger der jeweiligen Eckwinkel in die Flanschprofile einzustecken.

Bevorzugt ist vorgesehen, dass jede Linearachsenanordnung drei parallel zueinander ausgerichtete Linearachsen umfasst. Dadurch kann jeweils unabhängig voneinander die Eckwinkelaufnahme und die Flanschprofilaufnahme mit einer Verfahrbewegung in der jeweiligen Verfahrrichtung angesteuert werden.

Bevorzugt ist vorgesehen, dass die erste Linearachsenanordnung eine mittlere Linearachse aufweist, entlang der zumindest eine Flanschprofilaufnahme in und entgegen der Y-Richtung verfahrbar ist und zwei äu-ßere Linearachsen beidseitig zur mittleren Linearachse angeordnet sind und dass die zweite Linearachsenanordnung eine mittlere Linearachse aufweist, durch welche weitere Flanschprofile in und entgegen der X-Richtung verfahrbar sind und zwei äußere Linearachsen aufweist, die auf den äußeren Linearachsen der ersten Linearachsenanordnung vorgesehen sind, an denen die Eckwinkelaufnahmen vorgesehen sind. Diese Anordnung ermöglicht, das für jede Eckwinkelaufnahme ein Kreuztisch durch die Kreuzachsenanordnung geschaffen ist und dazwischenliegend Linearachsen zur Aufnahme der Flanschprofilaufnahme verfahrbar vorgesehen sind. Diese Anordnung ermöglicht auch die Herstellung von verschiedenen Größen der Rahmen. Darüber hinaus ist auch ermöglicht, dass sowohl im Querschnitt quadratische Rahmen als auch rechteckförmige Rahmen herstellbar sind.

Vorteilhafterweise ist jede der Linearachsen durch zwei getrennt und in Reihe zueinander angeordnete und ansteuerbare Linearachsenantriebe ausgebildet. Hierbei kann es sich beispielsweise um Schlittensysteme mit Riemenantrieben oder sonstigen Aufbauten handeln.

Die in der Montagevorrichtung vorgesehene Eckwinkelaufnahme umfasst zumindest ein Formnest zur Aufnahme des Eckwinkels. Vorteilhafterweise können auch zwei oder mehrere Formnester für verschiedene Grö-ßen der Eckwinkel vorgesehen sein. Auch kann ein Formnest zur Aufnahme von zwei unterschiedlichen Größen von Formnestern ausgebildet sein. Bevorzugt ist an der Eckwinkelaufnahme eine ansteuerbare Befestigungseinrichtung vorgesehen, insbesondere ein Spannzylinder mit einem Druckstück, um den oder die in die Eckwinkelaufnahmen eingesetzten Eckwinkel für die Montage zu fixieren.

Bevorzugt weisen die Flanschprofilaufnahmen ein Formnest zur Aufnahme der Flanschprofile auf. Insbesondere werden die Flanschprofile in der Flanschprofilaufnahme mittels Magnetkraft formschlüssig gehalten. Da die einander gegenüberliegenden Eckwinkel bevorzugt gleichzeitig in die jeweilige Kammer der Flanschprofile eingeschoben werden, heben sich die auf das Flanschprofil einwirkenden Kräfte gegenseitig auf, so dass für die Aufnahme der Flanschprofile die Ausrichtung der Flanschprofile genügen kann.

Bevorzugt sind an den Eckwinkelaufnahmen und/oder Flanschprofilaufnahmen Sensoren vorgesehen. Durch diese Sensoren kann sowohl das Vorhandensein des Bauteils als auch die Lage erfasst werden, um eine erhöhte Prozesssicherheit zu erzielen.

Bevorzugt ist vorgesehen, dass die Mehrfachgreifvorrichtung für eine Handhabungseinrichtung zur automatisierten Montage eines Rahmens, eine Anschlussstelle für die Aufnahme an der Handhabungseinrichtung aufweist, an die sich eine zylindrische Aufnahme anschließt und einen in der Längsmittelachse der Anschlussstelle drehbar ansteuerbaren Kopf aufweist, an welchem radial abstehend mehrere Flanschprofilgreifer zur Aufnahme von jeweils einem Flanschprofil vorgesehen sind und zumindest einen an dem Kopf vorgesehenen Eckwinkelgreifer zur Aufnahme von zumindest einem Eckwinkel aufweist, sowie eine Halteeinrichtung zur Aufnahme eines fertiggestellten Rahmens aus den Eckwinkeln und Flanschprofilen aufweist. Eine solche Mehrfachgreifvorrichtung weist den Vorteil auf, dass die erforderlichen Handhabungsschritte während der automatisierten Montage mit nur einer Greifvorrichtung durchgeführt werden kann, wodurch die Prozesszeiten erheblich reduziert werden können.

Bevorzugt ist ein Prägewerkzeug an der Mehrfachgreifvorrichtung vorgesehen. Dieses Prägewerkzeug ist vorteilhafterweise in der Längsmittelachse der Anschlussstelle und dieser gegenüberliegend das Prägewerkzeug ausgerichtet. Diese Anordnung ermöglicht, dass die Kraftrichtung für das Prägewerkzeug in einer Achse der Handhabungseinrichtung liegt, so dass keine Hebelkräfte während des Einbringens der Prägewerkzeuge entstehen und somit ein einfacher Aufbau der Mehrfachgreifvorrichtung ermöglicht ist.

Bevorzugt ist vorgesehen, dass der Eckwinkelgreifer als Magnetgreifer mit zumindest einem Haltedorn ausgebildet ist. Ein solcher Haltedorn kann beispielsweise in eine Befestigungsbohrung im Mittelteil des Eckwinkels eingreifen und durch die Magnetkraft den Eckwinkel aufnehmen.

Bevorzugt ist vorgesehen, dass die Länge des zumindest einen Haltedorns für die Aufnahme der Anzahl der für den Rahmen erforderlichen Eckwinkel ausgebildet ist. Dadurch können mehrere Eckwinkel insbesondere deckungsgleich aneinanderliegend von dem Eckwinkelgreifer aufgenommen werden und aufeinanderfolgend in Formnester der Eckwinkelaufnahmen an der Montagevorrichtung abgelegt werden.

Des Weiteren ist bevorzugt vorgesehen, dass der Eckwinkelgreifer zumindest ein Anschlagselement zur lagerichtigen Ausrichtung und Aufnahme des zumindest einen Eckwinkels aufweist. Dadurch kann eine definierte Ansteuerung der Lage für die Positionierung der Eckwinkel in den Eckwinkelaufnahmen der Montagevorrichtung erfolgen.

Alternativ und bevorzugt ist vorgesehen, dass zwei mit Abstand zueinander angeordnete Haltedorne vorgesehen werden. Dadurch kann bereits eine definierte Ausrichtung der Eckwinkel ermöglicht sein. Dabei kann jeder Haltedorn in eine Befestigungsbohrung eines Einsteckfingers des Eckwinkels eingreifen.

An dem Kopf der Mehrfachgreifvorrichtung ist bevorzugt die Anzahl von Flanschprofilgreifern vorgesehen, welche der Anzahl an Flanschprofilen für die Herstellung des Rahmens entspricht. Diese Flanschprofilgreifer nehmen die Flanschprofile vorzugsweise koaxial zur Längsmittelachse der Anschlussstelle auf.

Des Weiteren ist bevorzugt vorgesehen, dass die Flanschprofilgreifer als Magnetgreifer ausgebildet sind. Dadurch ist eine konstruktiv einfach ausgebildete als auch einfach ansteuerbare Greiferanordnung ermöglicht. Bevorzugt ist vorgesehen, dass die Flanschprofilgreifer in einem Winkel von 180° oder weniger aneinandergereiht an dem Kopf angeordnet sind und der Eckwinkelgreifer diesem Aufnahmebereich gegenüberliegend ausgerichtet ist. Dadurch kann sowohl eine störungsfreie Aufnahme der Flanschprofile und Eckwinkel aus dem Magazin oder dem Vorlagetisch erfolgen sowie eine einfache aufeinanderfolgende Positionierung der Eckwinkel und Flanschprofile in der Montagevorrichtung erfolgen.

Die an der Mehrfachgreifvorrichtung angeordnete Halteeinrichtung umfasst bevorzugt zwei mit Abstand zueinander angeordnete Haltelaschen, die vorzugsweise an deren stirnseitigem Ende eine Abrutschsicherung aufweist. Durch die zwei mit Abstand ausgerichteten Haltelaschen kann ein sicheres Greifen des fertiggestellten Rahmens ermöglicht sein, um diesen aus den Eckwinkelaufnahmen und Flanschprofilaufnahmen herauszuführen. Gleichzeitig kann dadurch eine definierte Übergabe und Ausrichtung des Rahmens an die Aufhängeeinrichtung an dem Wandelement ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht eines bekannten Luftkanalelementes,
- Figur 2: eine schematische Ansicht auf einen Eckwinkel gemäß Figur 1,
- Figur 3: eine perspektivische Ansicht eines Flanschprofils des Luftkanalelementes gemäß Figur 1,
- Figur 4: eine perspektivische Ansicht eines Rahmens für das Luftkanalelement gemäß Figur 1,
- Figur 5: eine perspektivische Ansicht einer nicht erfindungsgemäßen Montagezelle,
- Figur 6: eine schematische Seitenansicht auf eine Mehrfachgreifvorrichtung für eine Handhabungseinrichtung,
- Figur 7: eine weitere schematische Seitenansicht der Mehrfachgreifvorrichtung gemäß Figur 6,
- Figur 8: eine schematische Ansicht von oben auf die Mehrfachgreifvorrichtung gemäß Figur 6,
- Figur 9: eine weitere schematische Seitenansicht der Mehrfachgreifvorrichtung gemäß Figur 6,
- Figur 10: eine perspektivische Ansicht einer erfindungsgemäßen Montagevorrichtung für eine Montagezelle gemäß Figur 5,
- Figur 11: eine schematisch vergrößerte Ansicht von oben auf Eckwinkelaufnahmen und eine Flanschaufnahme der Montagevorrichtung gemäß Figur 10,
- Figuren 12 - 14: schematische Ansichten von Arbeitsschritten für eine automatisierte Montage des Rahmens gemäß Figur 4,
- Figur 15: eine perspektivische Ansicht der Umhausung gemäß Figur 5,
- Figur 16: eine schematische Ansicht von oben auf die Umhausung gemäß Figur 15, und
- Figur 17: eine perspektivische Ansicht eines Wandelementes für die Umhausung gemäß Figur 15.

In Figur 1 ist eine perspektivische Ansicht eines Luftkanalelements 11 dargestellt. Dieses Luftkanalelement 11 weist einen Luftkanalabschnitt 12 auf. Dieser weist bevorzugt geradflächige Wände mit einem beispielsweise rechteckförmigen Querschnitt auf. Alternativ können auch quadratische oder sonstige Querschnitte vorgesehen sein. Am vorderen und hinteren Ende des Luftkanalabschnitts 12 ist jeweils ein Rahmen 14 montiert. Dieser Rahmen 14 besteht aus Flanschprofilen 19, wobei zwei benachbart zueinander angeordnete Flanschprofile 19 durch einen Eckwinkel 16 miteinander verbunden sind. Dieser komplettierte Rahmen 14 aus vier Flanschprofilen 19 und vier Eckwinkeln 16 wird auf das Luftkanalelement 12 aufgeschoben und durch eine Klemmung und/oder Körnung fixiert. Dieser Rahmen 14 bildet einen Anschluss für ein benachbartes Luftkanalelement 11, wobei die beiden Rahmen 14 der Luftkanalelemente 11, insbesondere im Bereich der Eckwinkel 16, miteinander verbunden bzw. verschraubt werden.

In Figur 2 ist eine schematische Ansicht auf den Eckwinkel 16 dargestellt. Dieser Eckwinkel 16 weist ein Mittelteil 18 auf, von welchem aus sich jeweils ein Einsteckfinger 17 erstreckt. Die Einsteckfinger 17 sind vorzugsweise in einem Winkel von 90° zueinander ausgerichtet. Jeder Einsteckfinger 17 weist zumindest eine Befestigungsbohrung 53 auf. Durch das Einbringen einer Körnung in das Flanschprofil 19 im Bereich der Befestigungsbohrung 53 wird der Eckwinkel 16, insbesondere der Einsteckfinger 17, zum Flanschprofil 19 fixiert.

In Figur 3 ist eine perspektivische Ansicht eines beispielhaft ausgebildeten Flanschprofils 19 dargestellt. Dieses Flanschprofil 19 ist als Blechbiegeteil mit mehreren Abkantungen ausgebildet. Dieses Flanschprofil 19 umfasst eine erste Kammer 21, welche zur Aufnahme der Einsteckfinger 17 der Eckwinkel 16 vorgesehen sind. Des Weiteren umfasst das Flanschprofil 19 eine zweite Kammer 22, die einseitig offen ausgebildet ist. Diese zweiten Kammern 22 werden auf die stirnseitigen Enden des Luftkanalabschnitts 12 zur Aufnahme des Rahmens 14 aufgesteckt.

In Figur 4 ist perspektivisch der Rahmen 14 als vorkonfektionierte Baugruppe dargestellt. Dieser Rahmen 14 besteht aus den vier Flanschprofilen 19, die durch Eckwinkel 16 miteinander verbunden sind. Solche Rahmen 14 werden durch die nachfolgend näher beschriebene Montagevorrichtung 30 hergestellt.

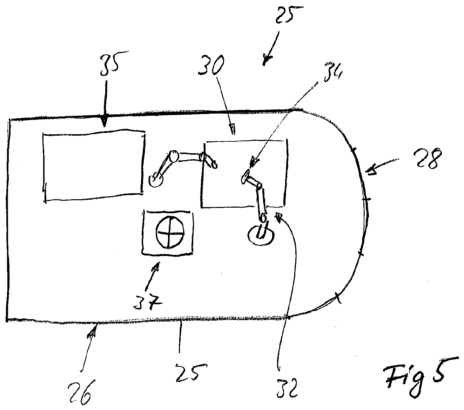

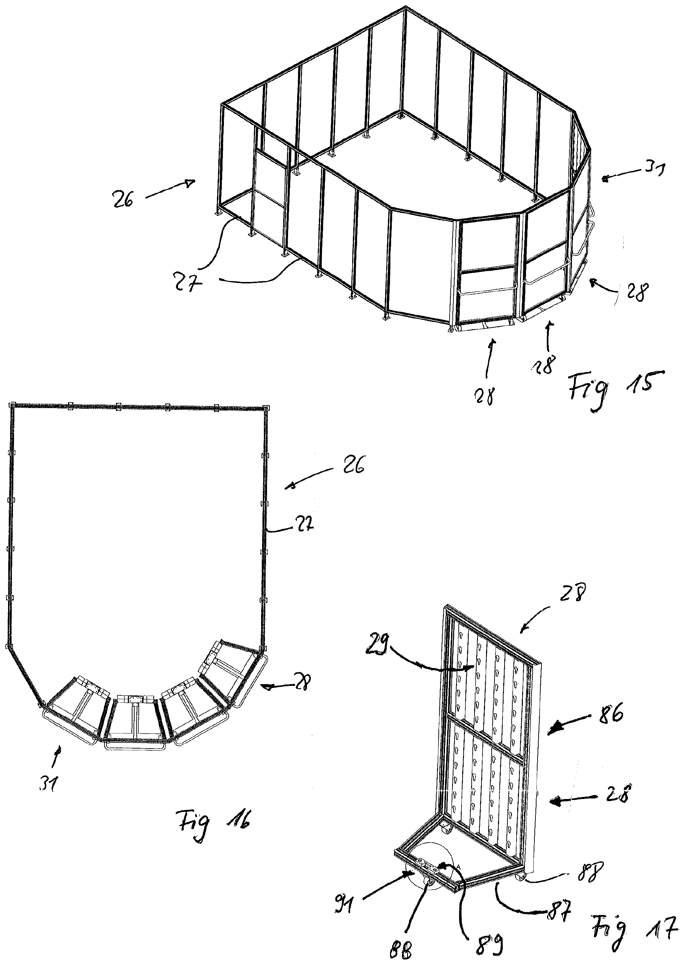

In Figur 5 ist perspektivisch eine Montagezelle 25 dargestellt. Diese Montagezelle 25 ermöglicht die automatisierte Montage und Herstellung des Rahmens 14 gemäß Figur 4. Die Montagezelle 25 umfasst eine Umhausung 26. Diese Umhausung 26 weist fest aneinandergereihte Schutzwände 27 sowie Wandelemente 28 auf, welche einzeln von der Umhausung 26 gelöst werden können, wie nachfolgend in den Figuren 15 bis 17 noch beschrieben wird.

Die Umhausung 26 umgibt einen Arbeitsraum. In diesem Arbeitsraum ist eine Montagevorrichtung 30 vorgesehen, durch welche die Eckwinkel 16 und die Flanschprofile 19 zusammengesteckt werden, um den Rahmen 14 gemäß Figur 4 zu bilden. Dieser Montagevorrichtung 30 zugeordnet ist eine Handhabungseinrichtung 32. Diese Handhabungseinrichtung 32 kann ein Mehrachsenroboter sein. Diese Handhabungseinrichtung 32 ist mit einem Mehrfachgreifelement 34 bestückbar. Dieses dient zur Handhabung der Eckwinkel 16 und Flanschprofile 19.

Benachbart zur Montagemaschine 30 ist ein Magazin 35 oder sind mehrere Magazine 35 vorgesehen, durch welche die Flanschprofile 19 und die Eckwinkel 16 zur Verarbeitung bereitgestellt werden. Des Weiteren kann in der Montagezelle 25 ein Vorlagetisch 37 vorgesehen sein. Auf diesen Vorlagetisch 37 können Eckwinkel 16 und/oder Flanschprofile 19 aufgelegt werden, damit darauffolgend das Mehrfachgreifelement 34 in einer definierten Lage und Ausrichtung die Eckwinkel 16 und/oder Flanschprofile 19 aufnimmt. Auch kann das Mehrfachgreifelement 34 Eckwinkel 16 und/oder Flanschprofile 19 unmittelbar aus dem oder den Magazinen 35 entnehmen.

Bei dieser Montagezelle 25 kann eine weitere Handhabungseinrichtung 32 vorgesehen sein, welche Eckwinkel 16 und/oder Flanschprofile 19 aus dem oder den Magazinen 35 entnimmt und auf den Vorlagetischen 37 bereitstellt. Die Handhabungseinrichtung 32 entnimmt dann die bereitgestellten Eckwinkel 16 und/oder Flanschprofile 19 von dem Vorlagetisch 37 und führt diese in die Montagevorrichtung 30 über. Nach der Montage des Rahmens 14 wird der fertiggestellte Rahmen 14 durch das Mehrfachgreifelement 34 der Handhabungseinrichtung 32 aus der Montagevorrichtung 30 entnommen. Von der Montagevorrichtung 30 wird der fertiggestellte Rahmen 14 an einen Speicher 31 übergeführt. Im Ausführungsbeispiel stellen die Wandelemente 28 den Speicher 31 dar. Die fertiggestellten Rahmen 14 werden an Aufhängeeinrichtungen 29 der Wandelemente 28 positioniert.

Sofern eine zusätzliche Handhabungseinrichtung nicht vorhanden ist, entnimmt die Handhabungseinrichtung 32 Eckwinkel 16 und/oder Flanschprofile 19 aus den Magazinen 35 und positioniert diese ggf. auf dem Vorlagetisch 37 und werden von dort aus der Montagevorrichtung 30 zugeführt. Sofern die Eckwinkel 16 und/oder die Flanschprofile 19 in einer definierten Lage den Magazinen 35 entnommen werden können, werden die Eckwinkel 16 und/oder die Flanschprofile 19 direkt in die Montagevorrichtung 30 übergeführt.

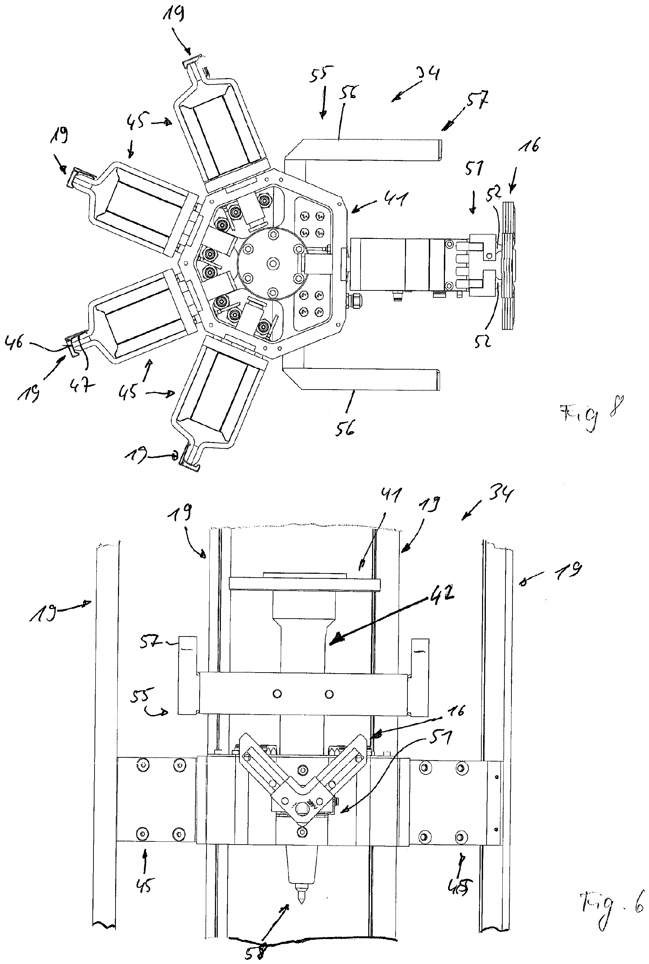

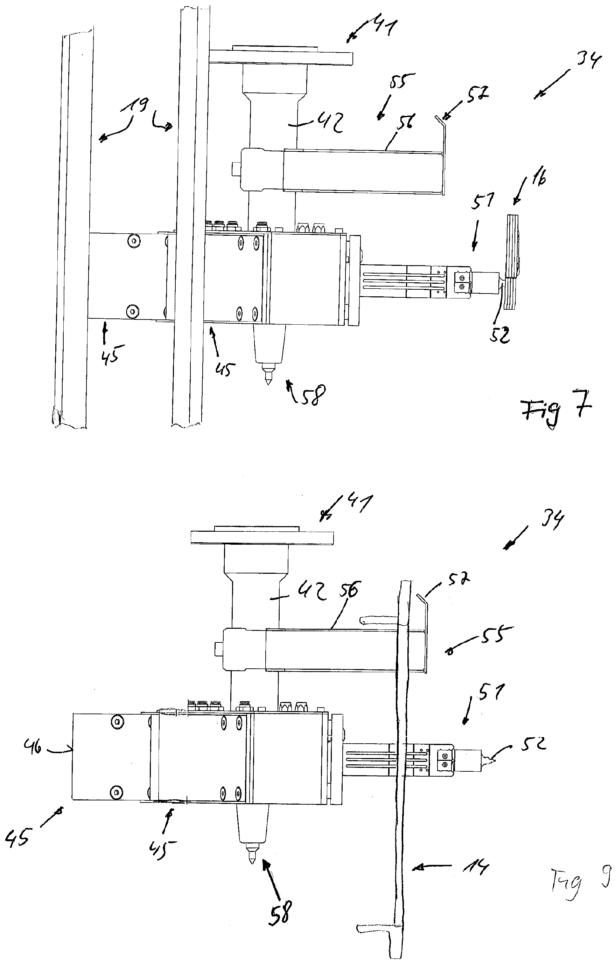

In Figur 6 ist eine erste schematische Seitenansicht und in Figur 7 eine zweite schematische Seitenansicht der Mehrfachgreifvorrichtung 34 dargestellt. Die Figur 8 zeigt eine Ansicht von oben auf die Mehrfachgreifvorrichtung 34 gemäß den Figuren 6 und 7.

Diese Mehrfachgreifvorrichtung 34 umfasst eine Anschlussstelle 41, die mit einer Schnittstelle der Handhabungseinrichtung 32 verbindbar ist. Dadurch wird sowohl eine mechanische als auch eine elektrische Verbindung zur Ansteuerung der Mehrfachgreifvorrichtung 34 gebildet. Von der Anschlussstelle 41 aus erstreckt sich eine zylindrische Aufnahme 42, an welcher rotierend ein Kopf 44 befestigt ist. An diesem Kopf 44 sind Flanschprofilgreifer 45 radial nach außen weisend positioniert. Diese Flanschprofilgreifer 45 sind gemäß Figur 8 aneinander angrenzend vorgesehen, vorzugsweise in einem Greifraum von 180° oder weniger als 180°. Diese Flanschprofilgreifer 45 sind als Magnetgreifer ausgebildet und weisen eine stirnseitige Anlagefläche 46 und eine seitliche Anlagefläche 47 auf. Dadurch kann das Flanschprofil 19 mit dessen Schenkeln 48, 49 (Figur 3) an dem Flanschprofilgreifer 45 in einer definierten Position aufgenommen sein.

Den Flanschprofilgreifern 45 gegenüberliegend ist ein Eckwinkelgreifer 51 vorgesehen. Dieser Eckwinkelgreifer 51 weist zumindest einen, vorzugsweise zwei, Haltedorne 52 auf. Dieser Haltedorn 52 ist in der Geometrie an eine Befestigungsbohrung 53 im Mittelteil 18 oder im Einsteckfinger 17 des Eckwinkels 16 angepasst. Der Haltedorn 52 greift zur Aufnahme der Eckwinkel 16 in die Befestigungsbohrung 53 ein. Die Eckwinkel 16 werden durch eine Magnethaltekraft zum Haltedorn 52 befestigt. Bevorzugt ist vorgesehen, dass durch die Länge des Haltedorns 52 vier aneinanderliegende Eckwinkel 16 gleichzeitig gehalten werden können.

An der zylindrischen Aufnahme 42 ist des Weiteren eine Halteeinrichtung 55 vorgesehen. Diese Halteeinrichtung 55 umfasst zwei im Abstand zueinander angeordnete Haltelaschen 56. Diese Haltelaschen 56 sind bevorzugt parallel zueinander ausgerichtet. Am freien stirnseitigen Ende der Haltelaschen 56 ist eine Abrutschsicherung 57 vorgesehen.

Die Figuren 6 bis 8 zeigen die Mehrfachgreifvorrichtung 34 vollständig bestückt. Durch diese Mehrfachgreifvorrichtung 34 können gleichzeitig vier Flanschprofile 19 und vier Eckwinkel 16 aufgenommen werden, die zur Bildung des Rahmens 14 benötigt werden. Diese vier Flanschprofile 19 und vier Eckwinkel 16 können durch die Mehrfachgreifvorrichtung 34 mittels einer einzigen Verfahrbewegung von dem oder den Magazinen 35 und/oder Vorlagetisch 37 zur Montagevorrichtung 30 übergeführt werden.

In Figur 9 ist eine schematische Seitenansicht der Mehrfachgreifvorrichtung 34 dargestellt, bei der die Eckwinkel 16 und Flanschprofile 19 in der Montagevorrichtung 30 abgelegt wurden. Die Mehrfachgreifvorrichtung 34 nimmt über die Halteeinrichtung 55 den von der Montagevorrichtung 30 fertiggestellten Rahmen 14 aus der Montagevorrichtung 30 heraus. Der Rahmen 14 wird durch die Haltelaschen 56 hängend gehalten. Die Abrutschsicherung 57 kann auch zur erleichterten Aufnahme des Rahmens 14 aus der Montagevorrichtung 30 dienen.

In der in Figur 9 dargestellten hängenden Anordnung des Rahmens 14 kann dieser an die Aufhängeeinrichtung 29 des Wandelementes 28 übergeführt werden.

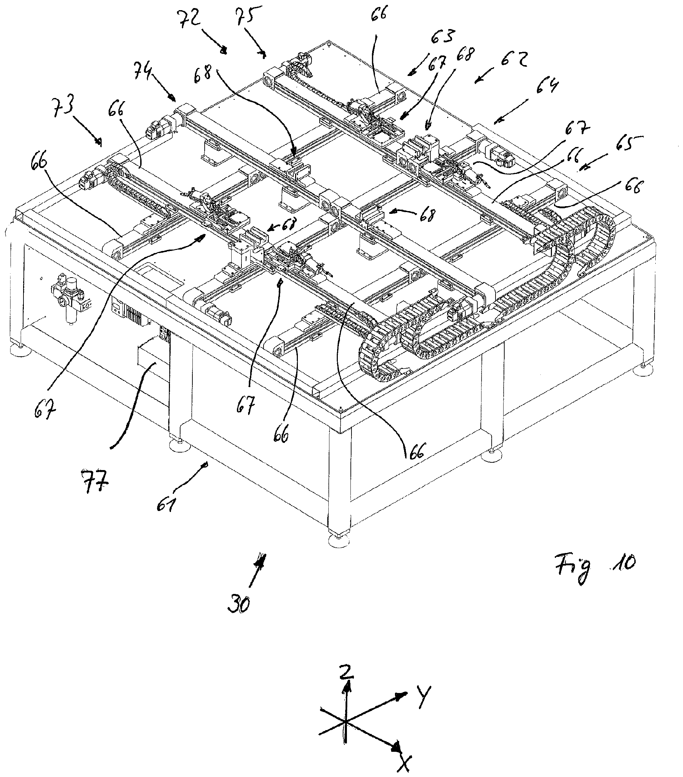

In Figur 10 ist eine perspektivische Ansicht auf die Montagevorrichtung 30 dargestellt. Die Montagevorrichtung 30 umfasst einen Grundrahmen 61 mit einer Arbeitsebene, welche sich vorzugsweise in X- und Y-Richtung erstreckt. Auf dem Grundrahmen 61 ist eine erste Linearachsenanordnung 62 vorgesehen. Dieser ersten Linearachsenanordnung 62 ist eine zweite Linearachsenanordnung 72 zugeordnet. Die Verfahrrichtungen der ersten und zweiten Linearachsenanordnungen 62, 72 sind um 90° versetzt zueinander. Bevorzugt ist die erste Linearachsenanordnung 62 in Y-Richtung verfahrbar und die zweite Linearachsenanordnung 72 in X-Richtung verfahrbar. Dies kann auch vertauscht sein. Durch die übereinanderliegende Zuordnung der ersten und zweiten Linearachsenanordnung 62, 72 kann eine Kreuztischanordnung geschaffen werden, durch welche die Montage der Eckwinkel 16 zu den Flanschprofilen 19 ermöglicht ist. Diese Kreuztischanordnung weist für jede Eckwinkelaufnahme 67 einen Kreuztisch auf.

Die erste Linearachsenanordnung 62 umfasst eine mittlere Linearachse 65 sowie jeweils eine äußere Linearachse 63, 65. Jede dieser Linearachsen ist bevorzugt aus zwei Linearantrieben 66 gebildet, die in Reihe zueinander angeordnet sind.

Die zweite Linearachsenanordnung 72 weist einen analogen Aufbau auf. Diese zweite Linearachsenanordnung 72 weist eine innere Linearachse 74 und eine äußere Linearachse 73, 75 auf. Diese Linearachsen 73, 74, 75 werden ebenfalls durch zwei Linearantriebe 66 ausgebildet, die in Reihe zueinander angeordnet sind.

Durch die über Kreuz angeordneten Linearantriebe 66 der äußeren Linearachsen 63, 73 und 65, 75 werden diese Kreuztische gebildet. Auf diesen Kreuztischen sind die Eckwinkelaufnahmen 67 positioniert.

Den mittleren Linearachsen 64 sind die Flanschprofilaufnahmen 68 zugeordnet. Diese mittleren Linearachsen 64 ermöglichen nur eine Verfahrrichtung der Flanschprofilaufnahmen 68 in und entgegen der Y-Richtung. Die mittlere Linearachse 74 der zweiten Linearachsenanordnung 72 ermöglicht für die daran vorgesehene Flanschprofilaufnahme 68 nur eine Verfahrbewegung in und entgegen der X-Richtung.

Die Ansteuerung der ersten und zweiten Linearachsenanordnung 62, 72 erfolgt über eine Steuerung 77. Diese Steuerung 77 ist mit einer Steuerung für die Handhabungseinrichtung 32 und der Mehrfachgreifvorrichtung 34 gekoppelt oder beinhaltet diese. Diese Steuerung kann auch Teil der Steuerung sein, welche die gesamte Montagezelle 25 überwacht und die einzelnen Komponenten in der Montagezelle 25 ansteuert.

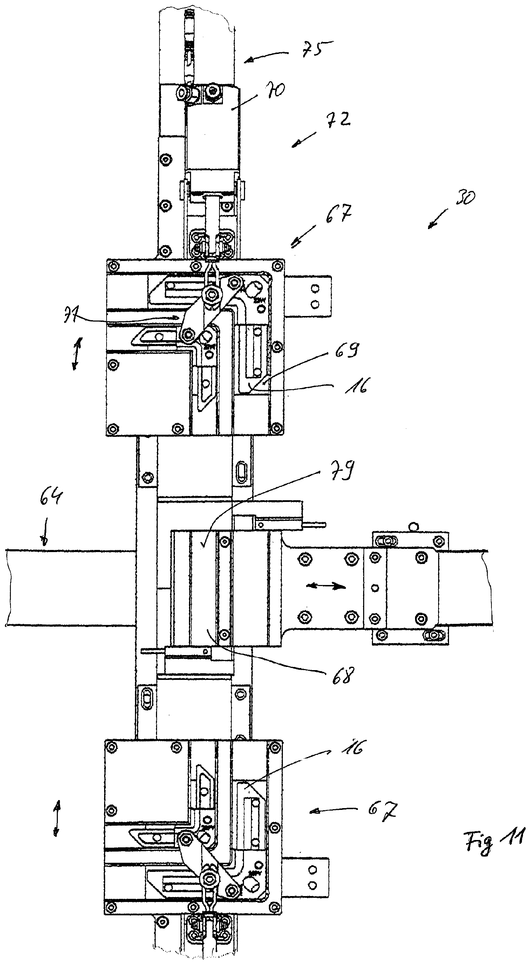

In Figur 11 ist eine schematisch vergrößerte Ansicht auf die Eckwinkelaufnahme 67 und die Flanschprofilaufnahme 68 dargestellt. Die Eckwinkelaufnahme 67 weist zumindest ein Formnest 69 zur Aufnahme des Eckwinkels 16 auf. Beispielhaft sind zwei Formnester 69 für zwei verschiedene Größen der Eckwinkel 16 vorgesehen. Nach dem Einlegen der Eckwinkel 16 in die Formnester 69 durch die Mehrfachgreifvorrichtung 34 kann eine Befestigungseinrichtung 70 betätigt werden, durch welche ein Druckstück auf den Eckwinkel 16 zubewegt und der Eckwinkel 16 in dem Formnest 69 fixiert gehalten wird. Diese Befestigungseinrichtung 70 kann ein Spannzylinder sein. Sofern zwei Formnester benachbart in einer Eckwinkelaufnahme 67 vorgesehen sind, können gleichzeitig mit der Befestigungseinrichtung 70 zwei Druckstücke angesteuert werden.

Die Flanschprofilaufnahme 68 kann ein U-förmiges Formnest 79 umfassen. Diesem Formnnest 79 kann wiederum ein ansteuerbarer Haltemagnet zugeordnet werden, so dass das eingelegte Flanschprofil 19 durch die Magnetkraft in deren Ausrichtung gehalten wird.

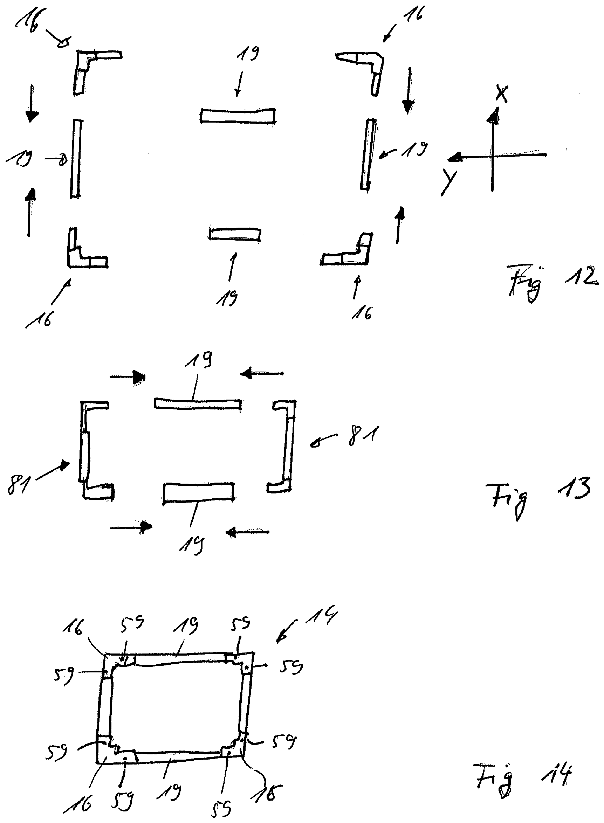

Zur Montage der Eckwinkel 16 und/oder Flanschprofile 19 mit der Montagevorrichtung 30 wird auf die Figuren 12 bis 14 Bezug genommen. Die Figuren 12 bis 14 zeigen schematisch die Montageschritte.

Nach dem Bestücken der Eckwinkelaufnahmen 67 mit Eckwinkeln 16 und der Flanschprofilaufnahmen 68 mit Flanschprofilen 19 wird die zweite Linearachsenanordnung 72 angesteuert, so dass die Eckwinkelaufnahmen 67 in und entgegen der X-Richtung auf die jeweiligen Flanschprofile 19 zubewegt werden. Dabei werden die Einsteckfinger 17 in die erste Kammer 21 der Flanschprofile 19 eingesteckt und eine Montagegruppe 81 gebildet. Diese Montagegruppe 81 besteht aus zwei in das Flanschprofil 19 eingesteckten Eckwinkeln 16. Darauffolgend wird die erste Linearachsenanordnung 62 für eine Verfahrbewegung in und entgegen der Y-Richtung angesteuert, so dass die jeweils freien Einsteckfinger 17 der Eckwinkel 16 in das dritte und vierte Flanschprofil 19 eingesteckt werden. Dies zeigt Figur 13. Nach Abschluss dieser Verfahrbewegung ist der Rahmen 14 gemäß Figur 14 hergestellt. Darauffolgend kann mittels dem Prägewerkzeug 58 in einen Verbindungsbereich oder Überlappungsbereich zwischen dem Flanschprofil 19 und dem Einsteckfinger 17 des Eckwinkels 16 eine Prägung eingebracht werden. Dabei ist insbesondere eine Prägung vorgesehen, welche beispielsweise mit der Befestigungsbohrung 53 im Einsteckfinger 17 oder einer Vertiefung im Einsteckfinger 17 korrespondiert. Durch diese Prägung oder Verpressung werden die Eckwinkel 16 zu den Flanschprofilen 19 gesichert.

In Figur 15 ist eine perspektivische Ansicht der Umhausung 26 mit Schutzwänden 27 und Wandelementen 28 dargestellt. Die Figur 16 zeigt eine Ansicht von oben auf die Umhausung 26. Die Figur 17 zeigt eine perspektivische Ansicht des Wandelementes 28.

Die Wandelemente 28 weisen eine Doppelfunktion auf. Zum einen bilden diese einen Teil der Umhausung 26, haben also die Funktion wie die Schutzwände 27, zum anderen übernehmen diese die Funktion des Speichers 31. Hierfür sind an einer Innenseite der Wandelemente 28 Aufhängeeinrichtungen 29 vorgesehen. An diesen Aufhängeeinrichtungen 29 können die fertiggestellten Rahmen 14 durch die Mehrfachgreifvorrichtung 34 mit dem aufgenommenen Rahmen 14, wie dies in Figur 9 dargestellt ist, positioniert oder abgelegt werden. Dieses Wandelement 28 weist einen vertikal ausgerichteten Tragrahmen 86 sowie einen horizontal ausgerichteten Grundrahmen 87 auf. An dem Grundrahmen 87 sind Laufrollen 88 vorgesehen, um das Wandelement 28 zu verfahren.

Am Wandelement 28, vorzugsweise an dessen Grundrahmen 87, ist zumindest ein Fixierelement 89 vorgesehen, um das Wandelement 28 in einer gesicherten Position zur Umhausung 26 zu halten. Vorteilhafterweise ist an dem Wandelement 28, insbesondere dem Grundrahmen 87, zumindest ein Sensorelement 91 vorgesehen. Dadurch kann abgefragt werden, ob alle Wandelemente 28 zur Bildung einer geschlossenen Umhausung 26 vorhanden und/oder zueinander fixiert sind, bevor ein automatisierter Montageprozess gestartet wird.

Die Wandelemente 28 können nach der Bestückung mit mehreren Rahmen 14 aus der Umhausung 26 gelöst werden und zu einem weiteren Arbeitsplatz oder einer weiteren Arbeitsstation übergeführt werden. Weitere unbestückte Wandelemente 28 können zur Komplettierung der Umhausung 26 wieder positioniert werden, um darauffolgend die automatische Montage von Rahmen 14 zeitnah fortzuführen.

## Patentansprüche

1. Verfahren zur automatisierten Montage eines Rahmens (14) bestehend aus Eckwinkeln (16) und Flanschprofilen (19) für ein Luftkanalelement (11),
- bei dem mit einer Handhabungseinrichtung (32) eine Montagevorrichtung (30) mit Flanschprofilen (19) und Eckwinkeln (16) bestückt wird,
- bei dem zwei einander gegenüberliegende und zu einem Flanschprofil (19) ausgerichtete Eckwinkel (16) in das Flanschprofil (19) eingesteckt werden und eine Montagegruppe (81) gebildet wird,
- bei dem zwei einander gegenüberliegende Montagegruppen (81) zu den dazwischen angeordneten Flanschprofilen (19) mit freiem Einsteckfinger (17) der Eckwinkel (16) der Montagegruppe (81) in die Flanschprofile (19) eingesteckt werden und ein geschlossener Rahmen (14) gebildet wird.

2. Verfahren nach Anspruch 1, **dadurch gekennzeichnet, dass** mit einer Mehrfachgreifvorrichtung (34) die Montagevorrichtung (30) mit Eckwinkeln (16) und Flanschprofilen (19) bestückt wird, und vorzugsweise die Flanschprofile (19) und/oder die Eckwinkel (16) in Magazinen (35) sortiert und ausgerichtet bereitgestellt werden und von der Mehrfachgreifvorrichtung (34) der Handhabungseinrichtung (32) gegriffen werden, oder die Flanschprofile (19) und/oder Eckwinkel (16) in Transportbehältern bereitgestellt werden, daraus entnommen und auf einen Vorlagetisch (37) aufgelegt werden und darauffolgend die Flanschprofile (19) und/oder Eckwinkel (16) in einer definierten Lage mit der Mehrfachgreifvorrichtung (34) gegriffen werden.

3. Verfahren nach Anspruch 2, **dadurch gekennzeichnet, dass** von der Mehrfachgreifvorrichtung (34) alle Eckwinkel (16) und Flanschprofile (19) zur Bildung des Rahmens (14) aufgenommen werden und mit einer Verfahrbewegung der Montagevorrichtung (30) zugeführt werden und/oder dass mit der Mehrfachgreifvorrichtung (34) aufeinanderfolgend Eckwinkelaufnahmen (67) mit Eckwinkeln (16) und Flanschprofilaufnahmen (68) mit Flanschprofilen (19) bestückt werden.

4. Verfahren nach einem der Ansprüche 2 oder 3, **dadurch gekennzeichnet, dass** während der Montage der Eckwinkel (16) und Flanschprofile (19) zu einem geschlossenen Rahmen (14) die Mehrfachgreifvorrichtung (34) oberhalb oder benachbart zur Montagevorrichtung (30) positioniert wird und vorzugsweise nach dem Zusammenstecken der Eckwinkel (16) und Flanschprofile (19) eine Prägung mit einem Prägewerkzeug (58) im Verbindungsbereich zwischen dem Flanschprofil (19) und eingestecktem Einsteckfinger (17) des Eckwinkels (16) durchgeführt wird und vorzugsweise die Prägung mit einem an der Mehrfachgreifvorrichtung (34) vorgesehenen Prägewerkzeug (38) durchgeführt wird und insbesondere die Mehrfachgreifvorrichtung (34) den geschlossenen Rahmen (14) aus der Montagevorrichtung (30) entnimmt und einem Speicher (31) zugeführt.

5. Verfahren nach einem der Ansprüche 2 bis 4, **dadurch gekennzeichnet, dass** die Mehrfachgreifvorrichtung (34) zur Bestückung mit Eckwinkeln (16) und Flanschen (19), mit einer an der Anschlussstelle (41) vorgesehenen zylindrischen Aufnahme (42) ausgebildet ist, welche um deren Längsmittelachse einen drehbar ansteuerbaren Kopf (44) aufnimmt, mit an dem Kopf (44) radial abstehend angeordneten Flanschprofilgreifern (45), mit zumindest einem daran angeordneten Eckwinkelgreifer (51), und mit einer Halteeinrichtung (55) zur Aufnahme eines fertiggestellten Rahmens (14).

6. Verfahren nach Anspruch 5, **dadurch gekennzeichnet, dass** in der Längsmittelachse der zylindrischen Aufnahme (42) des Mehrfachgreifers (34) und der Anschlussstelle (41) gegenüberliegend das Prägewerkzeug (58) vorgesehen ist.

7. Verfahren nach Anspruch 5 oder 6, **dadurch gekennzeichnet, dass** der Eckwinkelgreifer (51) als Magnetgreifer mit zumindest einem Haltedorn (52) ausgebildet ist und vorzugsweise die Länge des zumindest einen Haltedorns (52) für die Aufnahme der Anzahl der für den Rahmen (14) erforderlichen Eckwinkel (16) ausgebildet wird und/oder zur lagerichtigen Ausrichtung und Aufnahme des zumindest einen Eckwinkels (16) der Eckwinkelgreifer (51) mit zumindest einem Anschlagelement ausgebildet wird oder dass zwei Haltedorne (52) vorgesehen sind.

8. Verfahren nach einem der Ansprüche 5 bis 7, **dadurch gekennzeichnet, dass** an dem Kopf (44) die für die Anzahl des Rahmens (14) erforderlichen Flanschprofile (19) jeweils ein Flanschprofilgreifer (45) vorgesehen ist und/oder dass der Flanschprofilgreifer (45) als Magnetgreifer ausgebildet ist und vorzugsweise zumindest eine stirnseitige Anlagefläche (46) und eine seitliche Anlagefläche (47) zur Aufnahme des Flanschprofils (19) aufweist und/oder dass die Flanschprofilgreifer (45) in einem Winkel gleich oder kleiner als 180° zueinander an dem Kopf (44) angeordnet sind und diesem gegenüberliegend der Eckwinkelgreifer (51) ausgerichtet ist.

9. Verfahren nach einem der Ansprüche 5 bis 8, **dadurch gekennzeichnet, dass** die Halteeinrichtung (55) für die fertiggestellten Rahmen (14) zumindest zwei mit Abstand zueinander ausgerichtete Haltelaschen (56) aufweist, die vorzugsweise am stirnseitigen Ende eine Abrutschsicherung (57) umfassen.

10. Montagevorrichtung zur automatisierten Montage eines Rahmens (14), bestehend aus Flanschprofilen (19) und Eckwinkeln (16) für ein Luftkanalelement (11), insbesondere zur Durchführung des Verfahrens nach einem der Ansprüche 1 bis 4,
- mit einem Grundrahmen (61), der sich in einer Arbeitsebene erstreckt,
- mit einer ersten an dem Grundrahmen (61) vorgesehenen Linearachsenanordnung (62), welche in einer ersten Verfahrrichtung der Arbeitsebene verfahrbar ist,
- mit einer zweiten Linearachsenanordnung (72), welche in einer zweiten Verfahrrichtung der Arbeitsebene und rechtwinklig zur ersten Verfahrrichtung der ersten Linearachsenanordnung (62) verfahrbar ist, wobei die zweite Linearachsenanordnung (72) teilweise auf der ersten Linearachsenanordnung (62) vorgesehen und eine Kreuzachsenanordnung bildet und wobei die an den Linearachsenanordnungen (62, 72) positionierten Eckwinkelaufnahmen (67) und Flanschprofilaufnahmen (68) zur Montage des Rahmens (14) zueinander verfahrbar angesteuert sind.

11. Montagevorrichtung nach Anspruch 10, **dadurch gekennzeichnet, dass** jede Linearachsenanordnung (62, 72) drei parallel zueinander ausgerichtete Linearachsen (63, 64, 65; 73, 74, 75) aufweist und/oder jede Linearachse (63, 64, 65; 73, 74, 75) durch zwei getrennt ansteuerbare und in Reihe angeordnete Linearachsenantriebe (66) ausgebildet ist.

12. Montagevorrichtung nach Anspruch 10 oder 11, **dadurch gekennzeichnet,**
- **dass** die erste Linearachsenanordnung (62) eine mittlere Linearachse (64) aufweist, entlang der zumindest eine Flanschprofilaufnahme (68) in und entgegen der ersten Verfahrrichtung verfahrbar ist und zwei äußere, beidseitig zur mittleren Linearachse (64) angeordnete Linearachsen (63, 65) aufweist, und
- **dass** die zweite Linearachsenanordnung (72) eine mittlere Linearachse (74) aufweist, durch welche die weitere Flanschprofilaufnahme (68) in und entgegen der zweiten Verfahrrichtung verfahrbar sind, und zwei äußere Linearachsen (73, 75) aufweist, die auf den äußeren Linearachsen (63, 65) der ersten Linearachsenanordnung (62) vorgesehen sind und jeweils die eine Eckwinkelaufnahme (67) aufnehmen.

13. Montagevorrichtung nach einem der Ansprüche 10 bis 12, **dadurch gekennzeichnet, dass** die Eckwinkelaufnahme (67) zumindest ein Formnest (69) aufweist und der in die Eckwinkelaufnahme (67) eingesetzte Eckwinkel (16) durch eine ansteuerbare Befestigungseinrichtung (70), insbesondere einen Spannzylinder, mit einem Druckstück (71) fixierbar ist und/oder dass die Flanschprofilaufnahme (68) ein Formnest (79) zur Aufnahme des Flanschprofils (19) aufweist und vorzugsweise mit einer Magnethaltekraft formschlüssig das Flanschprofil (19) aufnimmt und vorzugsweise die Eckwinkelaufnahme (67) und die Flanschprofilaufnahme (68) zumindest einen Sensor umfasst, der zur Abfrage des Vorhandenseins und der Lage des Eckwinkels (16) und Flanschprofils (19) vorgesehen ist.

## Claims

1. Method for the automated assembly of a frame (14) consisting of corner brackets (16) and flange profiles (19) for an air duct element (11),
- in which an assembly device (30) is fitted with flange profiles (19) and corner brackets (16) using a handling device (32),
- in which two opposite corner brackets (16) aligned with a flange profile (19) are inserted into the flange profile (19) and an assembly group (81) is formed,
- in which two opposing assembly groups (81) are inserted into the flange profiles (19) with free insertion fingers (17) of the corner brackets (16) of the assembly group (81) to the flange profiles (19) arranged between them and a closed frame (14) is formed.

2. Method according to claim 1, **characterized in that** the assembly device (30) is equipped with corner angles (16) and flange profiles (19) using a multiple gripping device (34), and preferably the flange profiles (19) and/or the corner angles (16) are provided sorted and aligned in magazines (35) and are gripped by the multiple gripping device (34) of the handling device (32), or the flange profiles (19) and/or corner angles (16) are provided in transport containers, removed therefrom and placed on a feed table (37) and the flange profiles (19) and/or corner angles (16) are then gripped in a defined position by the multiple gripping device (34) .

3. Method according to claim 2, **characterized in that** all corner brackets (16) and flange profiles (19) for forming the frame (14) are picked up by the multiple gripping device (34) and fed to the assembly device (30) with a traversing movement and/or **in that** the multiple gripping device (34) is used to successively load corner bracket holders (67) with corner brackets (16) and flange profile holders (68) with flange profiles (19).

4. Method according to one of claims 2 or 3, **characterized in that in that** during the assembly of the corner angles (16) and flange profiles (19) to form a closed frame (14), the multiple gripping device (34) is positioned above or adjacent to the assembly device (30) and, preferably, after the corner angles (16) and flange profiles (19) have been plugged together, an embossing is carried out with an embossing tool (58) in the connecting region between the flange profile (19) and the inserted insertion finger (17) of the corner angle (16). of the corner bracket (16) and preferably the embossing is carried out with an embossing tool (38) provided on the multiple gripping device (34) and, in particular, the multiple gripping device (34) removes the closed frame (14) from the assembly device (30) and feeds it to a store (31).

5. Method according to one of claims 2 to 4, **characterized in that** the multiple gripping device (34) is designed for equipping with corner brackets (16) and flanges (19), with a cylindrical receptacle (42) provided at the connection point (41), which receives a head (44) which can be rotatably actuated about its longitudinal central axis, with flange profile grippers (45) arranged radially projecting on the head (44), with at least one corner angle gripper (51) arranged thereon, and with a holding device (55) for receiving a finished frame (14).

6. Method according to claim 5, **characterized in that** the embossing tool (58) is provided in the longitudinal central axis of the cylindrical receptacle (42) of the multiple gripper (34) and opposite the connection point (41).

7. Method according to claim 5 or 6, **characterized in that** the corner angle gripper (51) is designed as a magnetic gripper with at least one holding mandrel (52) and preferably the length of the at least one holding mandrel (52) is designed to accommodate the number of corner angles (16) required for the frame (14) and/or the corner angle gripper (51) is designed with at least one stop element for the correct orientation and accommodation of the at least one corner angle (16), or **in that** two holding mandrels (52) are provided.

8. Method according to one of claims 5 to 7, **characterized in that** the flange profiles (19) required for the number of frames (14) are each provided with a flange profile gripper (45) on the head (44) and/or **in that** the flange profile gripper (45) is designed as a magnetic gripper and preferably has at least one endgripper (45) is provided and/or **in that** the flange profile gripper (45) is designed as a magnetic gripper and preferably has at least one end contact surface (46) and one lateral contact surface (47) for receiving the flange profile (19) and/or **in that** the flange profile grippers (45) are arranged on the head (44) at an angle equal to or smaller than 180° to one another and the corner angle gripper (51) is aligned opposite thereto.

9. Method according to one of claims 5 to 8, **characterized in that** the holding device (55) for the finished frames (14) has at least two holding tabs (56) which are aligned at a distance from one another and which preferably comprise a slip-off protection (57) at the end face end.

10. Assembly device for the automated assembly of a frame (14), comprising flange profiles (19) and corner brackets (16) for an air duct element (11), in particular for carrying out the method according to one of claims 1 to 4,
- with a base frame (61) that extends in a working plane,
- with a first linear axis arrangement (62) provided on the base frame (61), which is movable in a first direction of travel of the working plane,
with a second linear axis arrangement (72), which is movable in a second direction of travel of the working plane and at right angles to the first direction of travel of the first linear axis arrangement (62), wherein the second linear axis arrangement (72) is partially provided on the first linear axis arrangement (62) and forms a cross-axis arrangement and wherein the corner angle holders (67) and flange profile holders (68) positioned on the linear axis arrangements (62, 72) are actuated so as to be movable relative to one another for mounting the frame (14).

11. Assembly device according to claim 10, **characterized in that** each linear axis arrangement (62, 72) has three linear axes (63, 64, 65; 73, 74, 75) aligned parallel to one another and/or each linear axis (63, 64, 65; 73, 74, 75) is formed by two linear axis drives (66) which can be actuated separately and are arranged in series.

12. Assembly device according to claim 10 or 11, **characterized in that**,
- **in that** the first linear axis arrangement (62) has a central linear axis (64), along which at least one flange profile holder (68) can be moved in and against the first direction of travel, and has two outer linear axes (63, 65) arranged on both sides of the central linear axis (64), and
- **in that** the second linear axis arrangement (72) has a central linear axis (74), by means of which the further flange profile receptacle (68) can be moved in and against the second direction of travel, and has two outer linear axes (73, 75), which are provided on the outer linear axes (63, 65) of the first linear axis arrangement (62) and each receive the one corner angle receptacle (67).

13. Assembly device according to one of claims 10 to 12, **characterized in that** the corner angle holder (67) has at least one shaped nest (69) and the corner angle (16) inserted into the corner angle holder (67) can be fixed by a controllable fastening device (70), in particular a clamping cylinder, with a pressure piece (71) and/or **in that** the flange profile holder (68) has a molded nest (79) for receiving the flange profile (19) and preferably receives the flange profile (19) in a form locking manner with a magnetic holding force and preferably the corner angle holder (67) and the flange profile holder (68) comprise at least one sensor which is provided for interrogating the presence and position of the corner angle (16) and flange profile (19).

## Revendications

1. Procédé de montage automatisé d'un cadre (14) composé de cornières d'angle (16) et de profilés de bride (19) pour un élément de canalisation d'air (11),
- dans lequel, à l'aide d'un dispositif de manipulation (32), un dispositif de montage (30) est équipé de profilés de bride (19) et d'équerres d'angle (16),
- dans lequel deux cornières d'angle (16) opposées l'une à l'autre et orientées vers un profilé à bride (19) sont enfichées dans le profilé à bride (19) et un groupe de montage (81) est formé,
- dans lequel deux groupes de montage (81) opposés l'un à l'autre sont enfichés dans les profilés de bride (19) par rapport aux profilés de bride (19) disposés entre eux avec un doigt d'enfichage libre (17) des cornières d'angle (16) du groupe de montage (81) et un cadre fermé (14) est formé.

2. Procédé selon la revendication 1, **caractérisé en ce qu'**avec un dispositif de préhension multiple (34), le dispositif de montage (30) est équipé de cornières d'angle (16) et de profilés de bride (19), et de préférence les profilés de bride (19) et/ou les cornières d'angle (16) sont mis à disposition triés et alignés dans des magasins (35) et sont saisis par le dispositif de préhension multiple (34) du dispositif de manipulation (32), ou les profilés de bride (19) et/ou les cornières d'angle (16) sont mis à disposition dans des récipients de transport, en sont retirés et sont posés sur une table de présentation (37) et ensuite les profilés de bride (19) et/ou les cornières d'angle (16) sont saisis dans une position définie par le dispositif de préhension multiple (34).

3. Procédé selon la revendication 2, **caractérisé en ce que** toutes les cornières d'angle (16) et tous les profilés de bride (19) sont reçus par le dispositif de préhension multiple (34) pour former le cadre (14) et sont amenés avec un mouvement de déplacement au dispositif de montage (30) et/ou **en ce que** des logements de cornières d'angle (67) sont équipés successivement de cornières d'angle (16) et des logements de profilés de bride (68) sont équipés successivement de profilés de bride (19) avec le dispositif de préhension multiple (34).

4. Procédé selon l'une des revendications 2 ou 3, **caractérisé en ce que** , que pendant l'assemblage des cornières d'angle (16) et des profilés de bride (19) en un cadre fermé (14), le dispositif de préhension multiple est monté sur le cadre fermé (14).(34) est positionné au-dessus ou à proximité du dispositif de montage (30) et, de préférence après l'assemblage des cornières d'angle (16) et des profilés de bride (19), un estampage est effectué avec un outil d'estampage (58) dans la zone de liaison entre le profilé de bride (19) et le doigt d'insertion (17) inséré, de la cornière d'angle (16) est effectué et de préférence l'estampage est effectué avec un outil d'estampage (38) prévu sur le dispositif de préhension multiple (34) et en particulier le dispositif de préhension multiple (34) retire le cadre fermé (14) du dispositif de montage (30) et l'amène à un magasin (31).

5. Procédé selon l'une des revendications 2 à 4, **caractérisé en ce que** le dispositif de préhension multiple (34) est conçu pour être équipé d'équerres d'angle (16) et de brides (19), avec un logement cylindrique (42) prévu au point de raccordement (41), qui reçoit autour de son axe médian longitudinal une tête (44) pouvant être commandée en rotation, avec des pinces de profilé de bride (45) disposées radialement en saillie sur la tête (44), avec au moins une pince d'angle (51) disposée sur celle-ci, et avec un dispositif de maintien (55) pour recevoir un cadre (14) terminé.

6. Procédé selon la revendication 5, **caractérisé en ce que** l'outil d'estampage (58) est prévu dans l'axe longitudinal médian du logement cylindrique (42) du préhenseur multiple (34) et en face du point de raccordement (41).

7. Procédé selon la revendication 5 ou 6, **caractérisé en ce que** le préhenseur d'angle (51) est réalisé sous la forme d'un préhenseur magnétique avec au moins un mandrin de retenue (52) et **en ce que**, de préférence, la longueur de l'au moins un mandrin de retenue (52) est réalisée pour la réception du nombre d'angles d'angle (16) nécessaires pour le cadre (14) et/ou **en ce que**, pour l'alignement correct et la réception de l'au moins un angle d'angle (16), le préhenseur d'angle (51) est réalisé avec au moins un élément de butée ou **en ce que** deux mandrins de retenue (52) sont prévus.

8. Procédé selon l'une des revendications 5 à 7, **caractérisé en ce que** , qu'un dispositif de préhension de profilés de bride (19), nécessaire pour le nombre du cadre (14), est monté sur la tête (44) est prévu et/ou que le préhenseur de profilé de bride (45) est conçu comme un préhenseur magnétique et présente de préférence au moins une surface d'appui frontale (46) et une surface d'appui latérale (47) pour recevoir le profilé de bride (19) et/ou que les préhenseurs de profilé de bride (45) sont disposés sur la tête (44) selon un angle égal ou inférieur à 180° l'un par rapport à l'autre et que le préhenseur d'angle (51) est orienté en face de celui-ci.

9. Procédé selon l'une des revendications 5 à 8, **caractérisé en ce que** le dispositif de retenue (55) pour les cadres finis (14) présente au moins deux pattes de retenue (56) orientées à distance l'une de l'autre, qui comprennent de préférence une sécurité anti-glissement (57) à l'extrémité frontale.

10. Dispositif de montage pour le montage automatisé d'un cadre (14), constitué de profilés de bride (19) et de cornières d'angle (16) pour un élément de conduit d'air (11), en particulier pour la mise en œuvre du procédé selon l'une des revendications 1 à 4,
- avec un cadre de base (61) qui s'étend dans un plan de travail,
- avec un premier agencement d'axes linéaires (62) prévu sur le cadre de base (61), lequel peut être déplacé dans une première direction de déplacement du plan de travail,
- avec un deuxième agencement d'axes linéaires (72) qui peut être déplacé dans une deuxième direction de déplacement du plan de travail et perpendiculairement à la première direction de déplacement du premier agencement d'axes linéaires (62), le deuxième agencement d'axes linéaires (72) étant prévu partiellement sur le premier agencement d'axes linéaires (62) et formant un agencement d'axes croisés et les logements d'angle (67) et les logements de profilés de bride (68) positionnés sur les agencements d'axes linéaires (62, 72) étant commandés de manière à pouvoir être déplacés les uns par rapport aux autres pour le montage du cadre (14) .

11. Dispositif de montage selon la revendication 10, **caractérisé en ce que** chaque agencement d'axes linéaires (62, 72) présente trois axes linéaires (63, 64, 65 ; 73, 74, 75) orientés parallèlement les uns aux autres et/ou chaque axe linéaire (63, 64, 65 ; 73, 74, 75) est formé par deux entraînements d'axes linéaires (66) pouvant être commandés séparément et disposés en série.

12. Dispositif de montage selon la revendication 10 ou 11, **caractérisé en ce que**
- **en ce que** le premier agencement d'axes linéaires (62) présente un axe linéaire central (64) le long duquel au moins un logement de profilé de bride (68) peut être déplacé dans la première direction de déplacement et dans la direction opposée et présente deux axes linéaires extérieurs (63, 65) disposés des deux côtés de l'axe linéaire central (64), et
- **en ce que** le deuxième agencement d'axes linéaires (72) présente un axe linéaire médian (74) par lequel l'autre logement de profilé de bride (68) peut être déplacé dans la deuxième direction de déplacement et dans la direction opposée, et présente deux axes linéaires extérieurs (73, 75) qui sont prévus sur les axes linéaires extérieurs (63, 65) du premier agencement d'axes linéaires (62) et reçoivent chacun l'un des logements d'angle (67).

13. Dispositif de montage selon l'une des revendications 10 à 12, **caractérisé en ce que** le logement d'angle (67) présente au moins une cavité de moulage (69) et l'angle (16) inséré dans le logement d'angle (67) est fixé par un dispositif de fixation (70) pouvant être commandé, en particulier un vérin de serrage, peut être fixé avec une pièce de pression (71) et/ou **en ce que** le logement de profilé de bride (68) présente un nid de forme (79) pour recevoir le profilé de bride (19) et reçoit le profilé de bride (19) de préférence avec une force de maintien magnétique forme de manière concluante et de préférence le logement d'angle (67) et le logement de profilé de bride (68) comprend au moins un capteur qui est prévu pour interroger la présence et la position de l'angle (16) et du profilé de bride (19).
